# EUROPEAN PATENT APPLICATION

(11) **EP 4 770 024 A1**
(43) Date of publication of application: **01.07.2026**
(21) Application number: 25867187.4
(22) Date of filing: 28.05.2025
(51) Int. Cl.: H04L 12/40, G06F 13/20, H04Q 1/02

(54) **DEDICATED MANAGEMENT NETWORK PORT CONNECTION SYSTEM, PHYSICAL LAYER CHIP MANAGEMENT METHOD, DEVICE, PRODUCT, AND MEDIUM**

(30) Priority: 29.09.2024 CN 202411367333
(71) Applicant: Suzhou Metabrain Intelligent Technology Co., Ltd., Suzhou, Jiangsu 215000 (CN)
(72) Inventor: WANG, Xuelong, Suzhou, Jiangsu 215000 (CN); WANG, Xiangyu, Suzhou, Jiangsu 215000 (CN); ZHANG, Xiubo, Suzhou, Jiangsu 215000 (CN); JI, Yintao, Suzhou, Jiangsu 215000 (CN)
(74) Representative: Michalski Hüttermann & Partner mbB
(86) International application number: PCT/CN2025/097843
(87) International publication number: WO 2026/066186

(57) **Abstract**

The present disclosure discloses a dedicated management network port connection system, a physical layer chip management method, a device, a product and a medium, and relates to the field of computer technologies. The system includes: a security control module board and a mainboard provided with a first connector, where the security control module board is provided with a management device and a first physical layer chip connected to the management device, and the system further includes: an input/output board installed on a front panel of a server chassis, where the input/output board is provided with a target socket of a dedicated management network port of the management device, a second physical layer chip and a second connector; where the first physical layer chip is connected in series with the second physical layer chip on the input/output board through the connectors by using a serial communication bus; and the management device on the security control module board controls the first physical layer chip and the second physical layer chip through several management buses. According to the technical solutions of the present disclosure, the problem that some sockets do not meet circuit design specifications may be solved.

## Description

### CROSS-REFERENCE TO RELATED APPLICATION

The present disclosure claims the priority of Chinese patent application filed on September 29, 2024 before the CNIPA, China National Intellectual Property Administration with the application number of 202411367333.8, and the title of "DEDICATED MANAGEMENT NETWORK PORT CONNECTION SYSTEM, PHYSICAL LAYER CHIP MANAGEMENT METHOD, DEVICE, PRODUCT AND MEDIUM", which is incorporated herein in its entirety by reference.

### FIELD

The present disclosure relates to the field of computer technologies, and in particular to a dedicated management network port connection system, a physical layer chip management method, a device, a product and a medium.

### BACKGROUND

A baseboard management controller (BMC) dedicated management network port refers to a network interface specially provided for a BMC on a server mainboard and is used to remotely monitor and manage server hardware status. The dedicated management network port is usually independent of a main network interface of a server, and even if an operating system of the server crashes or is not started, administrators can still remotely access the server through the BMC dedicated management network port for management and troubleshooting.

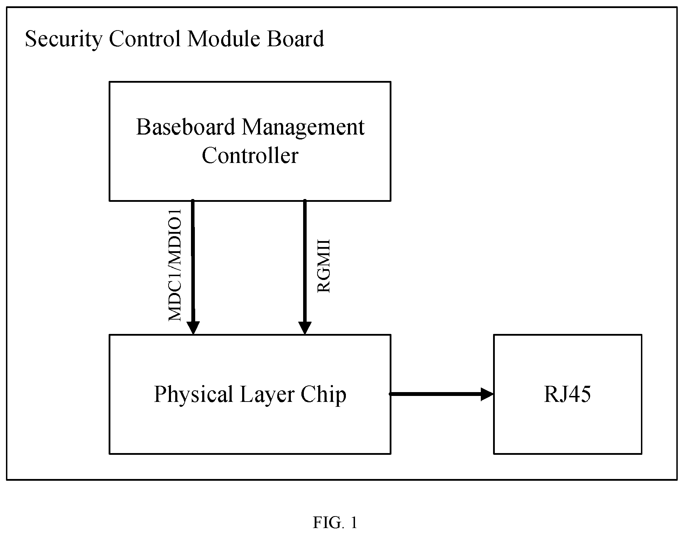

The BMC dedicated management network port relies on a physical layer (PHY) chip to realize a function of a physical layer, so as to ensure effective data transmission and smooth management operations. As shown in FIG. 1, FIG. 1 is a schematic diagram of a hardware design for managing the PHY chip by the BMC. In general, a RJ45 socket of a dedicated management network port is placed on a security control module (SCM) board and directly connected to the PHY chip. However, RJ45 may cause electromagnetic interference to a circuit, and since some graphics processing unit (GPU) manufacturers have relatively high hardware circuit requirements, their hardware design standards cannot be met. Therefore, how to provide a solution to solve the above technical problems is a problem that needs to be solved by a person skilled in the art at present.

### SUMMARY

In view of this, the purpose of the present disclosure is to provide a dedicated management network port connection system, a physical layer chip management method, a device, a product and a medium, which may solve the problem that some sockets of the dedicated management network port do not meet circuit design specifications. The specific solutions are as follows.

In a first aspect, the present disclosure discloses a dedicated management network port connection system, including: a security control module board and a mainboard provided with a first connector, where the security control module board is provided with a management device and a first physical layer chip connected to the management device, and the dedicated management network port connection system further includes:
an input/output board installed on a front panel of a server chassis, where the input/output board is provided with a target socket of a dedicated management network port of the management device, a second physical layer chip and a second connector; where the first physical layer chip on the security control module board is connected in series with the second physical layer chip on the input/output board through the first connector and the second connector in sequence by using a serial communication bus, the first connector and the second connector are connectors that support a preset high density storage connection, and the target socket is a socket capable of generating electromagnetic interference to the security control module board; and
the management device on the security control module board controls the first physical layer chip and the second physical layer chip through several management buses.

In some embodiments of the present disclosure, the management device on the security control module board is connected to the first physical layer chip through a reduced gigabit media independent interface bus.

In some embodiments of the present disclosure, the first physical layer chip on the security control module board is connected in series with the second physical layer chip on the input/output board through the first connector and the second connector in sequence by using a serial gigabit media independent interface bus.

In some embodiments of the present disclosure, the management device on the security control module board controls the first physical layer chip and the second physical layer chip through several management data input/output buses.

In some embodiments of the present disclosure, the management device is configured to control transmission rates of the first physical layer chip and the second physical layer chip.

In some embodiments of the present disclosure, the management device is configured to set the first physical layer chip and the second physical layer chip to a rate self-matching mode by using the management buses, so as to control the transmission rates.

In some embodiments of the present disclosure, the management device is configured to obtain transmission rate setting parameters of the second physical layer chip and set the transmission rate setting parameters to the transmission rate of the first physical layer chip by using the management bus, so as to control the transmission rates.

In some embodiments of the present disclosure, the management device is connected to the first physical layer chip by using a first management bus and is connected to the second physical layer chip through the first connector and the second connector in sequence by using a second management bus, where the first management bus and the second management bus are connected based on a multifunctional single-board multiplexing resistor; and
a first target position is reserved based on the multifunctional single-board multiplexing resistor without installing a resistor, so that a link between the management device and the second physical layer chip is in a disconnected state, where when controlling the physical layer chips, the management device sends a first control command to the first physical layer chip through the first management bus and sends a second control command to the second physical layer chip through the first management bus, so as to enable the management device to control the first physical layer chip and the second physical layer chip respectively through a management bus based on different control commands.

In some embodiments of the present disclosure, the management device is connected to the first physical layer chip by using a third management bus and is connected to the second physical layer chip through the first connector and the second connector in sequence by using a fourth management bus, where the third management bus and the fourth management bus are connected based on a multifunctional single-board multiplexing resistor; and
a second target position is reserved based on the multifunctional single-board multiplexing resistor without installing a resistor, so that a link between the management device and the second physical layer chip is in a connected state, where when controlling the physical layer chips, the management device sends a third control command to the first physical layer chip through the third management bus and sends a fourth control command to the second physical layer chip through the fourth management bus, so as to enable the management device to control the first physical layer chip and the second physical layer chip respectively through two management buses based on different control commands.

In some embodiments of the present disclosure, the management device is connected to the first physical layer chip through a fifth management bus; and
the first physical layer chip is connected to the second physical layer chip through the first connector and the second connector in sequence by using the fifth management bus, where when controlling the physical layer chips, the management device sends a fifth control command to the first physical layer chip through the fifth management bus, and the first physical layer chip sends the fifth control command to the second physical layer chip through the fifth management bus, so as to enable the management device to control the first physical layer chip and the second physical layer chip based on a same control command.

In some embodiments of the present disclosure, the first physical layer chip is connected to the second physical layer chip through the first connector and the second connector in sequence by using a sixth management bus, and the management device is connected to the first connector through a seventh management bus, where when controlling the physical layer chips, the management device sends a sixth control command to the second physical layer chip through the seventh management bus, and the second physical layer chip sends the sixth control command to the first physical layer chip through the sixth management bus, so as to enable the management device to control the first physical layer chip and the second physical layer chip based on a same control command.

In a second aspect, the present disclosure discloses a physical layer chip management method, applied to the above dedicated management network port connection system, where the method includes:
determining control links between the management device located on the security control module board of the dedicated management network port connection system with respective physical layer chips in the server, where the control links are communication links created between the management device with the respective physical layer chips based on several management buses, and the respective physical layer chips include the first physical layer chip located on the security control module board and the second physical layer chip located on the input/output board of the dedicated management network port connection system; and
sending control commands to the first physical layer chip and the second physical layer chip through the management device by using the control links, so as to control the first physical layer chip and the second physical layer chip.

In a third aspect, the present disclosure discloses an electronic device, including:
a memory configured to store a computer program; and
a processor configured to load and execute the computer program to implement the above physical layer chip management method.

In a fourth aspect, the present disclosure discloses a computer program product, including: computer programs or instructions, where the computer programs or instructions, when executed by a processor, cause the processor to implement steps of the above physical layer chip management method.

In a fifth aspect, the present disclosure discloses a computer non-transitory storage medium configured to store a computer program, where the computer program, when executed by a processor, causes the processor to implement the above physical layer chip management method.

The present disclosure provides the dedicated management network port connection system, including: a security control module board and a mainboard provided with a first connector, where the security control module board is provided with a management device and a first physical layer chip connected to the management device, and the dedicated management network port connection system further includes: an input/output board installed on a front panel of a server chassis, where the input/output board is provided with a target socket of a dedicated management network port of the management device, a second physical layer chip and a second connector; where the first physical layer chip on the security control module board is connected in series with the second physical layer chip on the input/output board through the first connector and the second connector in sequence by using a serial communication bus, the first connector and the second connector are connectors that support a preset high density storage connection, and the target socket is a socket capable of generating electromagnetic interference to the security control module board; and the management device on the security control module board controls the first physical layer chip and the second physical layer chip through several management buses.

The beneficial technical effects of the present disclosure are as follows: two physical layer chips are placed on the security control module board and the input/output board installed on the front panel of the server chassis, and the physical layer chip far away from a main circuit is connected to the target socket of the dedicated management network port, since the target socket may generate electromagnetic interference to the security control module board, after being far away from the main circuit, some hardware adaptations caused by the electromagnetic interference may be prevented from failing to meet the standards, and thus the problem that some sockets of the dedicated management network port do not meet circuit design specifications may be solved. When the physical layer chips are managed by the management device located on the security control module board in a server, the physical layer chips may be managed by several management buses through the connectors supporting the preset high density storage connection, which not only solves the problem of a transmission wiring distance between the mainboard and the input/output board, but also ensures the data transmission capability and transmission quality, thereby realizing the management of the physical layer chips by the management device.

In addition, the present disclosure provides the physical layer chip management method, the device, the product and the medium, which correspond to the above dedicated management network port connection system, and the effects are the same as above.

### BRIEF DESCRIPTION OF THE DRAWINGS

In order to more clearly explain some embodiments of the present disclosure or technical solutions in the related art, accompanying drawings needed to be used in the description of the embodiments or the related art will be briefly introduced below. It is apparent that the accompanying drawings in the following description are only the embodiments of the present disclosure. For a person skilled in the art, other accompanying drawings may be obtained according to the accompanying drawings provided without creative labor.
FIG. 1 is a schematic diagram of a hardware design for managing a physical layer (PHY) chip by a baseboard management controller (BMC) in the related art.
FIG. 2 is a schematic structural diagram of a dedicated management network port connection system disclosed in the present disclosure.
FIG. 3 is a system architecture diagram for managing physical layer (PHY) chips based on a multifunctional single-board multiplexing resistor disclosed in the present disclosure.
FIG. 4 is a detailed system architecture diagram for respectively controlling two physical layer (PHY) chips through a management bus disclosed in the present disclosure.
FIG. 5 is a simplified system architecture diagram for respectively controlling two physical layer (PHY) chips through a management bus disclosed in the present disclosure.
FIG. 6 is a detailed system architecture diagram for respectively controlling two physical layer (PHY) chips through two management buses disclosed in the present disclosure.
FIG. 7 is a simplified system architecture diagram for respectively controlling two physical layer (PHY) chips through two management buses disclosed in the present disclosure.
FIG. 8 is a detailed system architecture diagram for simultaneously controlling two physical layer (PHY) chips through a communication link of a management bus disclosed in the present disclosure.
FIG. 9 is a detailed system architecture diagram for simultaneously controlling two physical layer (PHY) chips through a communication link of a management bus disclosed in the present disclosure.
FIG. 10 is a flowchart of a physical layer chip management method disclosed in the present disclosure.
FIG. 11 is a schematic structural diagram of a physical layer chip management apparatus disclosed in the present disclosure.
FIG. 12 is a structural diagram of an electronic device disclosed in the present disclosure.

### DETAILED DESCRIPTION

Technical solutions in some embodiments of the present disclosure will be described clearly and completely with reference to the accompanying drawings in the embodiments of the present disclosure. Obviously, the described embodiments are only a part of the embodiments of the present disclosure, not all the embodiments. Based on the embodiments in the present disclosure, all other embodiments obtained by a person skilled in the art without creative labor belong to the protection scope of the present disclosure.

At present, since some GPU manufacturers have relatively high hardware circuit requirements, if the RJ45 socket of the BMC dedicated management network port is placed on the SCM board and directly connected to the PHY chip, it will cause electromagnetic interference to the circuit and cannot meet their hardware design standards. Therefore, the present disclosure provides a dedicated management network port connection system, which may solve the problem that some sockets of the current dedicated management network port do not meet circuit design specifications and realize the management of PHY chips at the same time.

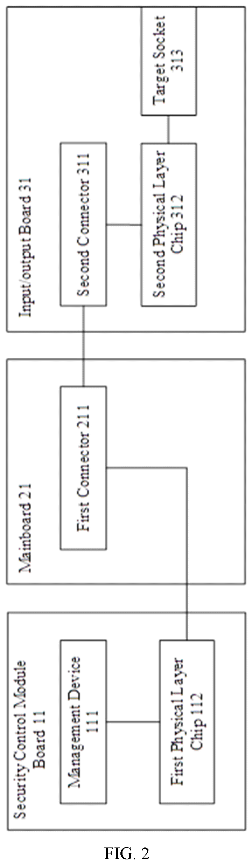

Some embodiments of the present disclosure disclose a dedicated management network port connection system. As shown in FIG. 2, the system includes a security control module board 11 and a mainboard 21 provided with a first connector 211. The security control module board 11 is provided with a management device 111 and a first physical layer chip 112 connected to the management device 111, and the dedicated management network port connection system further includes:
an input/output board 31 installed on a front panel of a server chassis, where the input/output board 31 is provided with a target socket 313 of a dedicated management network port of the management device 111, a second physical layer chip 312 and a second connector 311; where the first physical layer chip 112 on the security control module board 11 is connected in series with the second physical layer chip 312 on the input/output board 31 through the first connector 211 and the second connector 311 in sequence by using a serial communication bus, the first connector 211 and the second connector 311 are connectors that support a preset high density storage connection, and the target socket 313 is a socket capable of generating electromagnetic interference to the security control module board 11; and
the management device 111 on the security control module board 11 controls the first physical layer chip 112 and the second physical layer chip 312 through several management buses.

In some embodiments of the present disclosure, the dedicated management network port connection system is designed, which may be applied to a GPU server. Further, for the GPU server, in a specific embodiment, taking the management device 111 as the BMC and the target socket 313 as the RJ45 socket as examples to explain. A person skilled in the art may understand that the specific types of the above devices are only illustrative and do not cause technical limitations. In the following embodiments, the BMC and the RJ45 socket are taken as examples for explanation, and details will not be repeated later.

It can be understood that due to the requirements of the GPU manufacturers for the hardware design standards, the RJ45 socket of the BMC dedicated management network port cannot be placed on a SCM board with a BMC chip. Therefore, in the present disclosure, the RJ45 socket of the BMC dedicated management network port is placed on the input/output (IO) board, and then the IO board is placed in front of the server chassis to obtain a Front IO Board, that is the input/output board 31 in FIG. 2. In this way, the RJ45 socket is placed far away from the SCM board and the main circuit of mainboard, the standards of GPU manufacturers may be avoided, and electromagnetic and light wave interference may be avoided.

In general, the BMC dedicated management network port corresponds to an Ethernet PHY chip at the physical layer and a media access control (MAC) controller of the BMC chip at a MAC layer. The MAC layer transmits data with the Ethernet PHY chip at the physical layer through a reduced gigabit media independent interface (RGMII) bus. A MAC chip is responsible for processing data frames, and the PHY chip converts the data frames into electrical signals and transmits the electrical signals through network cables. Generally, a management data input/output (MDIO) bus is used to configure and monitor the PHY chip, and the BMC accesses management registers of the PHY chip through the MDIO bus to configure the behavior of the PHY chip and monitor the state of the PHY chip.

Therefore, in some embodiments of the present disclosure, the management device 111 on the security control module board 11 is connected to the first physical layer chip 112 through a reduced gigabit media independent interface bus. The management device 111 on the security control module board 11 controls the physical layer chips through the management data input/output bus.

It should be pointed out that the RGMII is used to connect a medium access control (MAC) layer and the PHY chip, thereby reducing a number of pins and being suitable for gigabit Ethernet. When the BMC manages the connection of the PHY chip, a relatively simple solution is to directly connect the RJ45 to a first physical layer chip PHY1 on the SCM board through a cable. However, since the wiring distance is too long and the connection with the cable will cause electromagnetic interference to the circuit, the RJ45 cannot directly connect to the PHY1 on the SCM board through a long cable across the IO board and the mainboard. Therefore, in order to solve this problem, in some embodiments of the present disclosure, a second physical layer chip PHY2 is placed on the IO board and connected to the PHY 1 on the SCM board through a serial gigabit media independent interface (SGMII) bus. At the same time, the BMC needs to manage two physical layer chips through the MDIO bus.

The SGMII bus is an interface standard for high speed data transmission between computers with peripheral devices such as hard disk drives, tape drives, scanners and printers. Since the transmission capability of the SGMII bus is relatively strong and the wiring distance can be relatively long, the manner of using two PHY chips in series and converting RGMII transmission to SGMII transmission may not only meet the design of the BMC dedicated management network port, but also overcome the problems of the wiring distance limitation, the insufficient transmission capacity and long distance wiring failure of the RGMII.

Further, in order to ensure the data transmission capability and transmission quality, the first connector 211 and the second connector 311 that support the preset high density storage connection are placed on the mainboard 21 and the input/output board 31 respectively. In a specific embodiment, the connector can be connected by a Slim Line (SASx8) cable, so as to transmit data from the SGMII bus over a long distance with high efficiency and high quality. A SASx8 (Serial Attached Small Computer System Interface (SCSI)) device is a compact design solution that supports the high density storage connection, which is suitable for high performance storage requirements in servers and storage systems. By providing eight SAS ports, efficient data storage and management may be realized in a limited space. In this way, the problems of SGMII/MDIO bus transmission and short wiring distance are further solved, and the data transmission capability and transmission quality may also be ensured at the same time.

That is, the first physical layer chip 112 on the security control module board 11 is connected in series with the second physical layer chip 312 on the input/output board 31 through the first connector 211 and the second connector 311 in sequence by using the serial gigabit media independent interface bus.

In addition, aiming at the SCM board, the mainboard and the IO board in the architecture of the dedicated management network port connection system, the positions thereof in the server chassis can also be reasonably designed to save the main space occupied by the dedicated management network port connection system, make full use of the chassis position to reserve enough space, and then set up as many other boards as possible, so as to provide favorable conditions for functional expansion and performance improvement by optimizing the space design without increasing the product size.

The present disclosure provides the dedicated management network port connection system, including: the security control module board and the mainboard provided with the first connector, where the security control module board is provided with the management device and the first physical layer chip connected to the management device, and the dedicated management network port connection system further includes: the input/output board installed on the front panel of the server chassis, where the input/output board is provided with the target socket of the dedicated management network port of the management device, the second physical layer chip and the second connector; where the first physical layer chip on the security control module board is connected in series with the second physical layer chip on the input/output board through the first connector and the second connector in sequence by using the serial communication bus, the first connector and the second connector are connectors that support the preset high density storage connection, and the target socket is the socket capable of generating electromagnetic interference to the security control module board; and the management device on the security control module board controls the first physical layer chip and the second physical layer chip through several management buses.

The beneficial technical effects of the present disclosure are as follows: two physical layer chips are placed on the security control module board and the input/output board installed on the front panel of the server chassis, and the physical layer chip far away from a main circuit is connected to the target socket of the dedicated management network port, since the target socket may generate electromagnetic interference to the security control module board, after being far away from the main circuit, some hardware adaptations caused by the electromagnetic interference may be prevented from failing to meet the standards, and thus the problem that some sockets of the dedicated management network port do not meet circuit design specifications may be solved. When the physical layer chips are managed by the management device located on the security control module board in a server, the physical layer chips may be managed by several management buses through the connectors supporting the preset high density storage connection, which not only solves the problem of a transmission wiring distance between the mainboard and the input/output board, but also ensures the data transmission capability and transmission quality, thereby realizing the management of the physical layer chips by the management device.

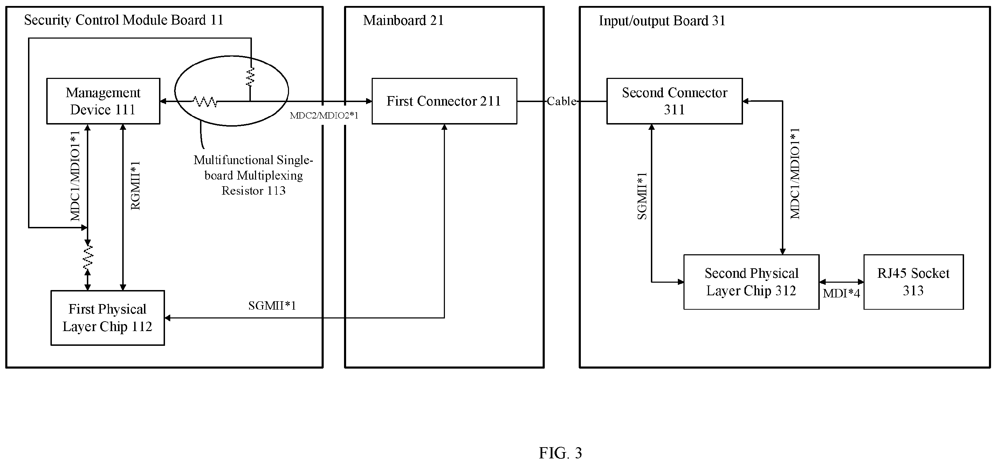

In the present disclosure, the management device 111 on the security control module board 11 needs to control the first physical layer chip 112 and the second physical layer chip 312 through several management buses to realize the management of the physical layer chips by the management device. As shown in FIG. 3, FIG. 3 is a schematic diagram of a driving solution in which a BMC manages two PHY chips respectively through one or two MDIO buses. A multifunctional single-board multiplexing resistor 113 (Colay) is set on the security control module.

In circuit design, the Colay resistor is a technology to realize multifunctional single-board multiplexing through the specific wiring structure and the resistor layout. Specifically, by reasonably placing Colay resistors on a printed circuit board (PCB) and setting vias corresponding to the Colay resistors and signal lines, multiple functional application scenarios may be compatible on the same board without developing a new board for each function, thereby saving the cost and improving the design efficiency.

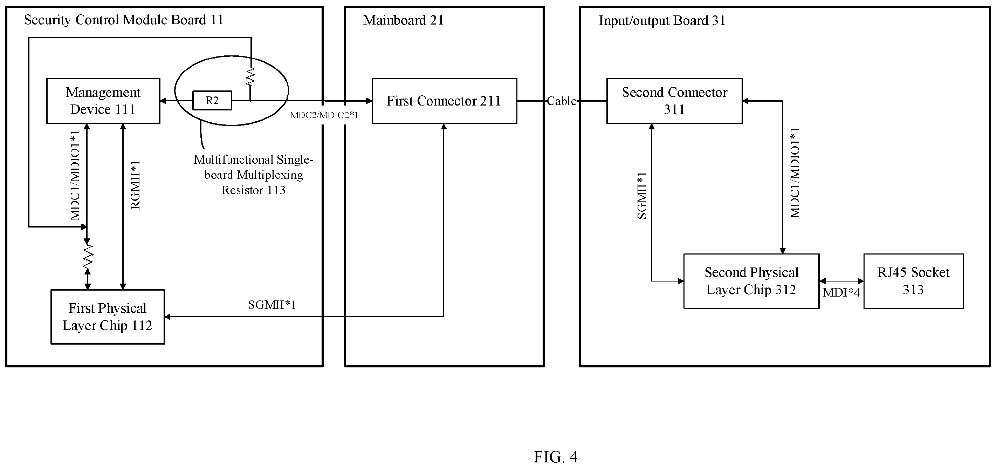

Based on some of the above embodiments, in a feasible implementation, as shown in FIG. 4, FIG. 4 is a schematic diagram of a driving solution in which a BMC manages two PHY chips respectively through an MDIO bus.

Specifically, the management device 111 is connected to the first physical layer chip 112 by using a first management bus and is connected to the second physical layer chip 312 through the first connector 211 and the second connector 311 in sequence by using a second management bus, where the first management bus and the second management bus are connected based on a multifunctional single-board multiplexing resistor 113; and
a first target position R2 is reserved based on the multifunctional single-board multiplexing resistor 113 without installing a resistor, so that a link between the management device 111 and the second physical layer chip 312 is in a disconnected state, where when controlling the physical layer chips, the management device 111 sends a first control command to the first physical layer chip 112 through the first management bus and sends a second control command to the second physical layer chip 312 through the first management bus, so as to enable the management device 111 to control the first physical layer chip 112 and the second physical layer chip 312 respectively through a management bus based on different control commands.

In some embodiments of the present disclosure, at the hardware link level, no resistor is installed at the position of the reserved resistor R2. In this way, a link between the BMC and the management data clock (MDC2)/MDIO2 of the second physical layer chip 312 on the IO board is disconnected. Therefore, the BMC is connected to both the first physical layer chip 112 on the SCM board and the second physical layer chip 312 on the IO board through the MDC1/MDIO1 bus, which forms a solution that the BMC controls two PHYs through an MDIO bus.

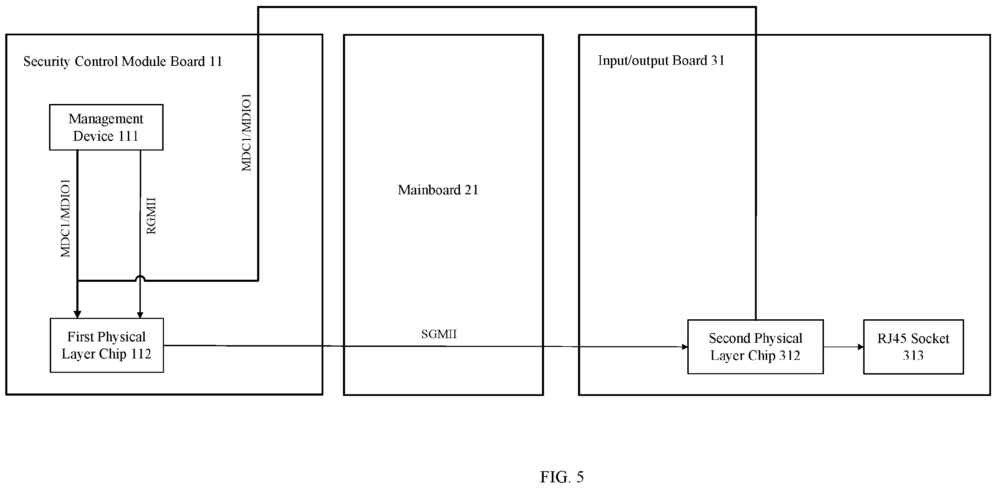

That is, the corresponding final hardware link in FIG. 4 is: (1) the BMC on the SCM board is connected to the PHY1 (the first physical layer chip) through the RGMII bus, and the PHY1 is connected to the Slim Line SASx8 interface on the mainboard through the SGMII bus; (2) the MDIO bus of the BMC on the SCM board is connected to the PHY1 and the Slim Line SASx8 interface on the mainboard respectively; (3) the PHY2 (the second physical layer chip) on the IO board is connected to the Slim Line SASx8 interface through the SGMII bus and the MDIO bus; (4) finally, the Slim Line SASx8 interface on the mainboard and the Slim Line SASx8 interface on the IO board are connected by the Slim Line SASx8 cable. The corresponding simplified architecture diagram is shown in FIG. 5.

It should be pointed out that at the driver level, a kernel of the BMC binds the MDIO1 with the PHY1 and the PHY2. At the same time, since the PHY2 is connected to the RJ45 socket, the outside world accesses the dedicated management network of the BMC through the PHY2, and thus a MAC2 is bound with the PHY2. Since the PHY1 is a transit chip, there is no need to bind a MAC. When the kernel of the BMC is started, configurations (for example, data transmission rate, duplex mode, medium type, and the like) of the PHY1 chip and the PHY2 chip are initialized respectively through the MDIO1. The BMC communicates with the PHY1 and the PHY2 through the MDIO1 to send control commands to the PHY1 chip and the PHY2 chip, and thus the BMC needs to carry addresses of the PHY chips when sending the commands, for example, an address of the PHY1 is 0x0, and an address of the PHY2 is 0x1. Further, the driving solution that the BMC manages two PHY chips respectively through an MDIO bus is realized according to the control commands.

In addition, in some embodiments of the present disclosure, in order to prevent the transmission speed from decreasing due to the inconsistency between the transmission rates of the PHY1 and the PHY2, the transmission rates of the first physical layer chip and the second physical layer chip are controlled by the management device, so that the PHY1 follows the PHY2 to maintain a consistent transmission rate.

In a first specific embodiment, the management device sets the first physical layer chip and the second physical layer chip to a rate self-matching mode by using the management bus, so as to control the transmission rates. That is, the BMC sets the PHY1/PHY2 to the rate self-matching mode through the MDIO1, so that the PHY1/PHY2 may automatically negotiate the best transmission rate and mode with devices to the PHY1/PHY2, thereby ensuring the compatibility and the best performance between the PHY1/PHY2 with the devices. Moreover, the data transmission rate may be automatically adjusted under different network conditions, thereby improving the communication efficiency and stability.

In a second specific embodiment, the management device obtains transmission rate setting parameters of the second physical layer chip and sets the transmission rate setting parameters to the transmission rate of the first physical layer chip by using the management bus, so as to control the transmission rates. That is, the BMC obtains the setting parameters of the PHY2 and then sets the setting parameters to the PHY1 through the MDIO1.

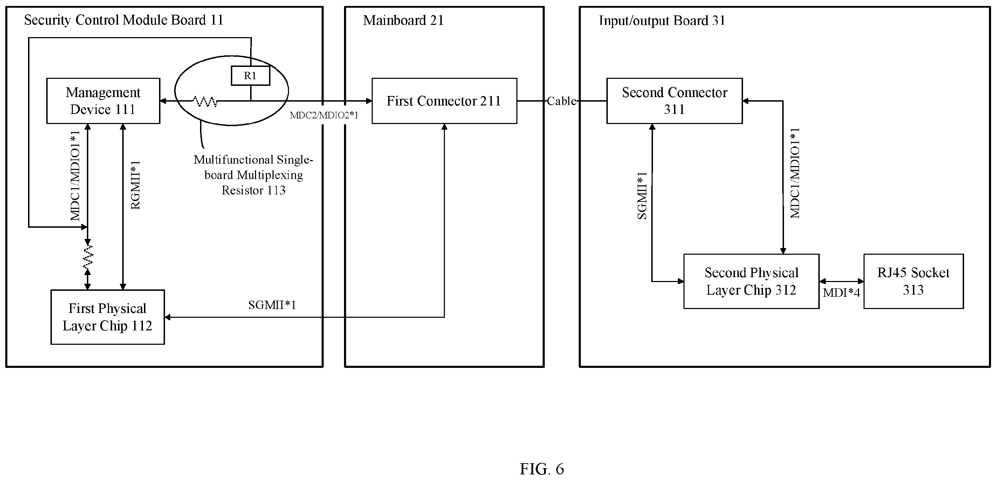

Based on some of the above embodiments, in a feasible implementation, as shown in FIG. 6, FIG. 6 is a schematic diagram of a driving solution in which a BMC manages two PHY chips respectively through two MDIO buses.

Specifically, the management device 111 is connected to the first physical layer chip 112 by using a third management bus and is connected to the second physical layer chip 312 through the first connector 211 and the second connector 311 in sequence by using a fourth management bus, where the third management bus and the fourth management bus are connected based on a multifunctional single-board multiplexing resistor 113; and
a second target position R1 is reserved based on the multifunctional single-board multiplexing resistor 113 without installing a resistor, so that a link between the management device 111 and the second physical layer chip 312 is in a connected state, where when controlling the physical layer chips, the management device 111 sends a third control command to the first physical layer chip 112 through the third management bus and sends a fourth control command to the second physical layer chip 312 through the fourth management bus, so as to enable the management device 111 to control the first physical layer chip 112 and the second physical layer chip 312 respectively through two management buses based on different control commands.

In some embodiments of the present disclosure, at the hardware link level, no resistor is installed at the position of the reserved resistor R1. In this way, a link between the BMC and the MDC2/MDIO2 of the second physical layer chip 312 on the IO board is connected. Therefore, the BMC is connected to the first physical layer chip 112 on the SCM board through the MDC1/MDIO1 bus and connected to the second physical layer chip 312 on the IO board through the MDC2/MDIO2 bus, which forms a solution that the BMC controls two PHYs respectively through two MDIO buses.

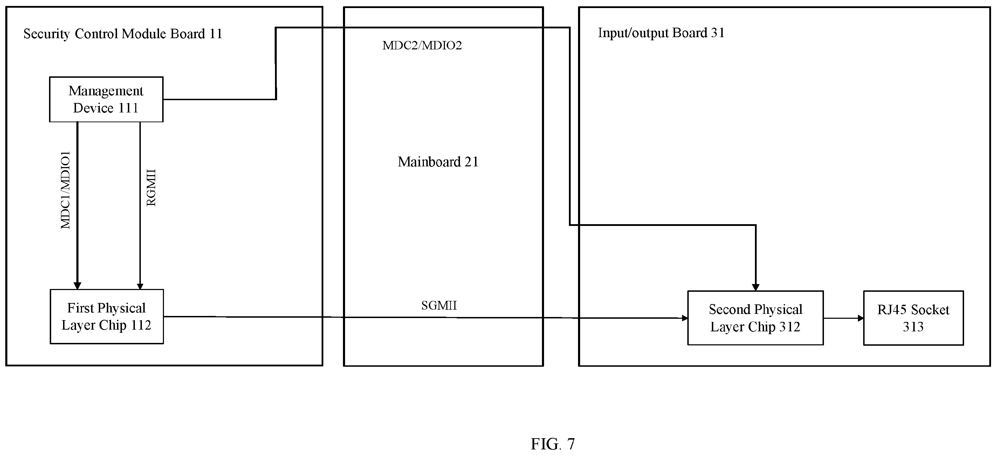

That is, the corresponding final hardware link in FIG. 6 is: (1) (1) the BMC on the SCM board is connected to the PHY1 (the first physical layer chip) through the RGMII bus, and the PHY1 is connected to the Slim Line SASx8 interface on the mainboard through the SGMII bus; (2) the MDIO bus of the BMC on the SCM board is connected to the PHY1 and the Slim Line SASx8 interface on the mainboard respectively; (3) the PHY2 (the second physical layer chip) on the IO board is connected to the Slim Line SASx8 interface through the SGMII bus and the MDIO bus; (4) finally, the Slim Line SASx8 interface on the mainboard and the Slim Line SASx8 interface on the IO board are connected by the Slim Line SASx8 cable. The corresponding simplified architecture diagram is shown in FIG. 7.

It should be pointed out that at the driver level, the kernel of the BMC binds the MDIO1 with the PHY1 and the MDIO2 with the PHY2. At the same time, since the PHY2 is connected to the RJ45 socket, the outside world accesses the dedicated management network of the BMC through the PHY2, and thus a MAC2 is bound with the PHY2. Since the PHY1 is a transit chip, there is no need to bind a MAC. When the kernel of the BMC is started, the configurations (for example, data transmission rate, duplex mode, medium type, and the like) of the PHY1 chip and the PHY2 chip are initialized respectively through the MDIO1 and the MDIO2.

Similarly, in some embodiments of the present disclosure, in order to prevent the transmission speed from decreasing due to the inconsistency between the transmission rates of the PHY1 and the PHY2, it is necessary to require the PHY1 to follow the PHY2 to maintain a consistent transmission rate. Therefore, the BMC sets the PHY1/PHY2 to the rate self-matching mode through the MDIO1, or the BMC obtains the setting parameters of the PHY2 and then sets the setting parameters to the PHY1 through the MDIO1.

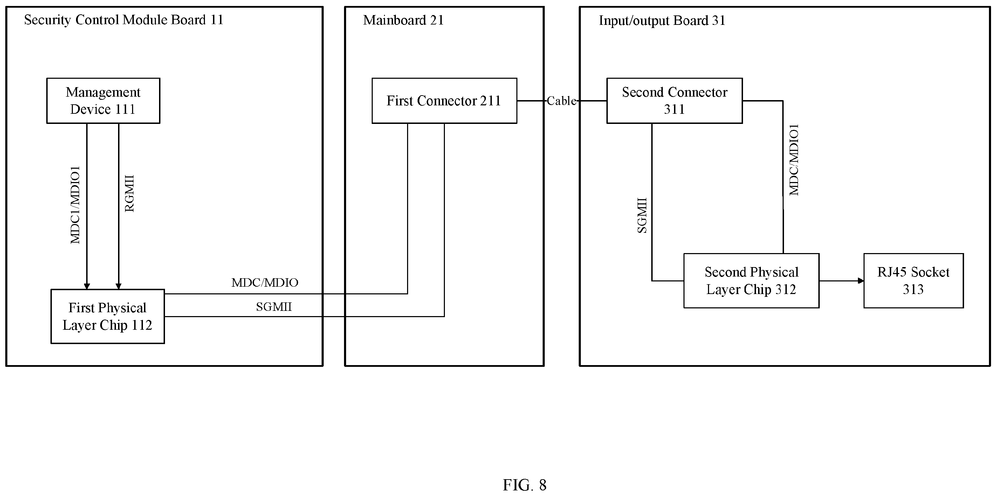

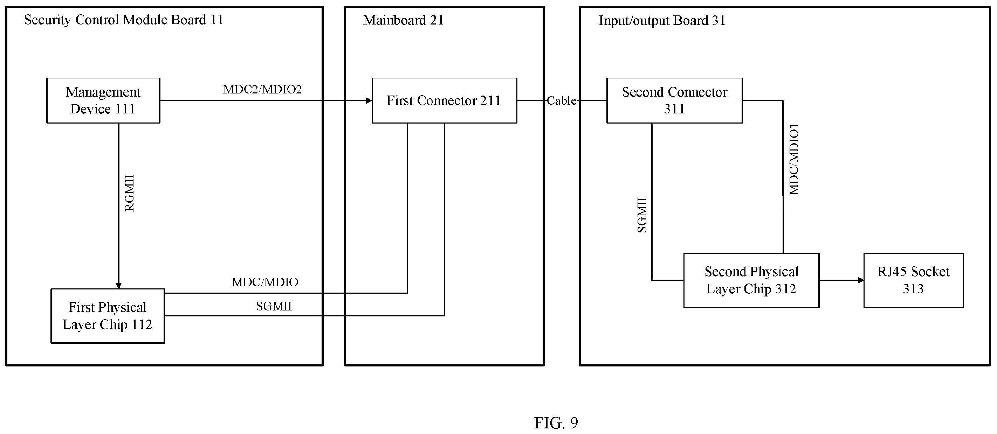

Further, as shown in FIG. 8 and FIG. 9, FIG. 8 and FIG. 9 are schematic diagrams of a driving solution in which the BMC controls two PHY chips simultaneously through only a communication link of an MDIO bus.

In a specific embodiment, as shown in FIG. 8, specifically, the management device 111 is connected to the first physical layer chip 112 through a fifth management bus; and
the first physical layer chip 112 is connected to the second physical layer chip 312 through the first connector 211 and the second connector 311 in sequence by using the fifth management bus, where when controlling the physical layer chips, the management device 111 sends a fifth control command to the first physical layer chip 112 through the fifth management bus, and the first physical layer chip 112 sends the fifth control command to the second physical layer chip 312 through the fifth management bus, so as to enable the management device 111 to control the first physical layer chip 112 and the second physical layer chip 312 based on a same control command.

The corresponding hardware links in some embodiments of the present disclosure are: (1) the BMC on the SCM board is connected to the PHY1 (the first physical layer chip) through the RGMII bus, and the PHY1 is connected to the Slim Line SASx8 interface on the mainboard through the SGMII bus; (2) the MDIO bus of the BMC on the SCM board is connected to the PHY1; (3) the PHY1 on the SCM board is connected to the Slim Line SASx8 interface on the mainboard through the MDIO bus; (4) the PHY2 (the second physical layer chip) on the IO board is connected to the Slim Line SASx8 interface through the SGMII bus and the MDIO bus; (5) finally, the Slim Line SASx8 interface on the mainboard and the Slim Line SASx8 interface on the IO board are connected by the Slim Line SASx8 cable.

It should be pointed out that at the driver level, the kernel of the BMC binds the MDIO1 with the PHY1. At the same time, since the PHY2 is connected to the RJ45 socket, the outside world accesses the dedicated management network of the BMC through the PHY2, and thus a MAC2 is bound with the PHY2. Since the PHY1 is a transit chip, there is no need to bind a MAC. When the kernel of the BMC is started, the PHY1 is initialized through the MDIO1, the control command is sent to the PHY1 through the MDIO1 bus, and then the PHY1 sends the same control command sent by the BMC to the PHY2 through the MDIO bus, thereby completing the control and management of the PHY1 and the PHY2 by the BMC at the same time.

In another specific embodiment, as shown in FIG. 9, specifically, the first physical layer chip 112 is connected to the second physical layer chip 312 through the first connector 211 and the second connector 311 in sequence by using a sixth management bus, and the management device 111 is connected to the first connector 211 through a seventh management bus, where when controlling the physical layer chips, the management device 111 sends a sixth control command to the second physical layer chip 312 through the seventh management bus, and the second physical layer chip 312 sends the sixth control command to the first physical layer chip 112 through the sixth management bus, so as to enable the management device 111 to control the first physical layer chip 112 and the second physical layer chip 312 based on the same control command.

The corresponding hardware links in some embodiments of the present disclosure are: (1) the BMC on the SCM board is connected to the PHY1 (the first physical layer chip) through the RGMII bus, and the PHY1 is connected to the Slim Line SASx8 interface on the mainboard through the SGMII bus; (2) the MDIO bus of the BMC on the SCM board is connected to the Slim Line SASx8 interface on the mainboard; (3) the PHY1 on the SCM board is connected to the Slim Line SASx8 interface on the mainboard through the MDIO bus; (4) the PHY2 (the second physical layer chip) on the IO board is connected to the Slim Line SASx8 interface through the SGMII bus and the MDIO bus; (5) finally, the Slim Line SASx8 interface on the mainboard and the Slim Line SASx8 interface on the IO board are connected by the Slim Line SASx8 cable.

It should be pointed out that at the driver level, the kernel of the BMC binds the MDIO2 with the PHY2. At the same time, since the PHY2 is connected to the RJ45 socket, the outside world accesses the dedicated management network of the BMC through the PHY2, and thus a MAC2 is bound with the PHY2. Since the PHY1 is a transit chip, there is no need to bind a MAC. When the kernel of the BMC is started, the PHY2 is initialized through the MDIO2, the control command is sent to the PHY2 through the MDIO2 bus, and then the PHY2 sends the same control command sent by the BMC to the PHY1 through the MDIO, thereby completing the control and management of the PHY1 and the PHY2 by the BMC at the same time.

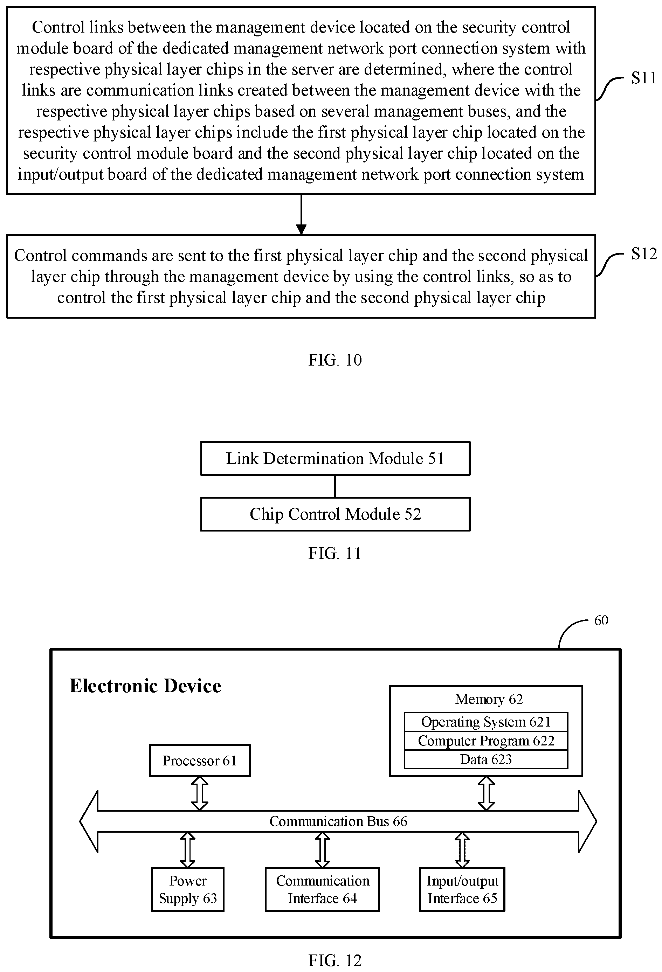

Some embodiments of the present disclosure disclose a physical layer chip management method, applied to the dedicated management network port connection system disclosed in the above embodiments. As shown in FIG. 10, the method includes:
step S11, control links between the management device located on the security control module board of the dedicated management network port connection system with respective physical layer chips in the server are determined, where the control links are communication links created between the management device with the respective physical layer chips based on several management buses, and the respective physical layer chips include the first physical layer chip located on the security control module board and the second physical layer chip located on the input/output board of the dedicated management network port connection system; and
step S12, control commands are sent to the first physical layer chip and the second physical layer chip through the management device by using the control links, so as to control the first physical layer chip and the second physical layer chip.

In some embodiments of the present disclosure, the problem that some sockets of the dedicated management network port of the management device do not meet circuit design specifications is solved by placing two physical layer chips. Therefore, when it is applied to the dedicated management network port connection system designed in the present disclosure, by determining the control links between the management device located on the security control module board of the dedicated management network port connection system with respective physical layer chips in the server, data transmission is further realized according to the control links, and the management of the physical layer chips by the management device is realized through the control commands. More specific processing procedures of the above steps may refer to the corresponding contents disclosed in the above embodiments, and details will not be repeated herein.

Some embodiments of the present disclosure provide the physical layer chip management method, applied to the dedicated management network port connection system, including: determining control links between the management device located on the security control module board of the dedicated management network port connection system with respective physical layer chips in the server, where the control links are communication links created between the management device with the respective physical layer chips based on several management buses, and the respective physical layer chips include the first physical layer chip located on the security control module board and the second physical layer chip located on the input/output board of the dedicated management network port connection system; and sending control commands to the first physical layer chip and the second physical layer chip through the management device by using the control links, so as to control the first physical layer chip and the second physical layer chip.

The beneficial technical effects of the present disclosure are as follows: two physical layer chips are placed on the security control module board and the input/output board installed on the front panel of the server chassis, and the physical layer chip far away from a main circuit is connected to the target socket of the dedicated management network port, since the target socket may generate electromagnetic interference to the security control module board, after being far away from the main circuit, some hardware adaptations caused by the electromagnetic interference may be prevented from failing to meet the standards, and thus the problem that some sockets of the dedicated management network port do not meet circuit design specifications may be solved. When the physical layer chips are managed by the management device located on the security control module board in a server, the physical layer chips may be managed by several management buses through the connectors supporting the preset high density storage connection, which not only solves the problem of a transmission wiring distance between the mainboard and the input/output board, but also ensures the data transmission capability and transmission quality, thereby realizing the management of the physical layer chips by the management device.

Correspondingly, some embodiments of the present disclosure further disclose a physical layer chip management apparatus. As shown in FIG. 11, the apparatus includes:
a link determination module 51 configured to determine control links between the management device located on the security control module board of the dedicated management network port connection system with respective physical layer chips in the server, where the control links are communication links created between the management device with the respective physical layer chips based on several management buses, and the respective physical layer chips include the first physical layer chip located on the security control module board and the second physical layer chip located on the input/output board of the dedicated management network port connection system; and
a chip control module 52 configured to send control commands to the first physical layer chip and the second physical layer chip through the management device by using the control links, so as to control the first physical layer chip and the second physical layer chip.

More specific working processes of the above modules may refer to the corresponding contents disclosed in the above embodiments, and details will not be repeated herein.

It can be seen that the above solutions of some embodiments of the present disclosure are applied to the dedicated management network port connection system, including: determining control links between the management device located on the security control module board of the dedicated management network port connection system with respective physical layer chips in the server, where the control links are communication links created between the management device with the respective physical layer chips based on several management buses, and the respective physical layer chips include the first physical layer chip located on the security control module board and the second physical layer chip located on the input/output board of the dedicated management network port connection system; and sending control commands to the first physical layer chip and the second physical layer chip through the management device by using the control links, so as to control the first physical layer chip and the second physical layer chip.

The beneficial technical effects of the present disclosure are as follows: two physical layer chips are placed on the security control module board and the input/output board installed on the front panel of the server chassis, and the physical layer chip far away from a main circuit is connected to the target socket of the dedicated management network port, since the target socket may generate electromagnetic interference to the security control module board, after being far away from the main circuit, some hardware adaptations caused by the electromagnetic interference may be prevented from failing to meet the standards, and thus the problem that some sockets of the dedicated management network port do not meet circuit design specifications may be solved. When the physical layer chips are managed by the management device located on the security control module board in a server, the physical layer chips may be managed by several management buses through the connectors supporting the preset high density storage connection, which not only solves the problem of a transmission wiring distance between the mainboard and the input/output board, but also ensures the data transmission capability and transmission quality, thereby realizing the management of the physical layer chips by the management device.

Further, some embodiments of the present disclosure further disclose an electronic device. FIG. 12 is a structural diagram of an electronic device 60 according to some exemplary embodiments, and contents in the FIG. 12 should not be construed as any limitation on the application scope of the present disclosure.

FIG. 12 is a schematic structural diagram of an electronic device 60 provided in some embodiments of the present disclosure. The electronic device 60 may specifically include at least one processor 61, at least one memory 62, a power supply 63, a communication interface 64, an input/output interface 65 and a communication bus 66. The memory 62 is used to store a computer program. The computer program is loaded and executed by the processor 61 to implement relevant steps in the physical layer chip management method disclosed in the above embodiments. In addition, the electronic device 60 in some embodiments of the present disclosure may specifically be a server.

In some embodiments of the present disclosure, the power supply 63 is used to provide a working voltage for each hardware device on the electronic device 60; the communication interface 64 may create a data transmission channel between the electronic device 60 and an external device, and a communication protocol followed thereby is any communication protocol that may be applied to the technical solutions of the present disclosure, which will not be specifically limited herein; and the input/output interface 65 is used to obtain external input data or output data to the outside, and the specific interface type thereof may be selected according to specific application needs, which will not be specifically limited herein.

In addition, the memory 62, as a carrier for resource storage, may be a read-only memory, a random access memory, a magnetic disk or an optical disk; resources stored thereon include an operating system 621, a computer program 622, data 623, and the like, and the data 623 may include a variety of data. The storage mode may be temporary storage or permanent storage.

The operating system 621 is used to manage and control each hardware device and the computer program 622 on the electronic device 60, and the operating system 621 may be Windows Server, Netware, Unix, Linux, and the like. In addition to the computer program that may be used to implement the physical layer chip management method executed by the electronic device 60 disclosed in the above embodiments, the computer program 622 may further include a computer program that may be used to complete other specific operations.

Further, some embodiments of the present disclosure further disclose a computer non-transitory storage medium, which includes a random access memory (RAM), memory, a read-only memory (ROM), an electrically programmable ROM, an electrically erasable programmable ROM, a register, a hard disk, a magnetic disk or an optical disk, or any other form of storage medium known in the art. When executed by a processor, the computer program implements the above physical layer chip management method. The specific steps of the method may refer to the corresponding contents disclosed in the above embodiments, and details will not be repeated herein.

Further, some embodiments of the present disclosure further provide a computer program product, including: computer programs or instructions, where the computer programs or instructions, when executed by a processor, cause the processor to implement any one of the above physical layer chip management methods.

Some embodiments in the specification are described in a progressive manner, some embodiments focus on the difference from other embodiments, and the same and similar parts of some embodiments can be referred to each other. The apparatuses disclosed in some embodiments are substantially similar to the method embodiments, and thus the description is relatively simple, and the relevant points can be found in part of the description of the method embodiments.

Steps of the physical layer chip management method or algorithm described in connection with some embodiments disclosed herein may be directly implemented in hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable disk, a compact disk read-only memory (CD-ROM), or any other form of nonvolatile readable storage medium known in the art.

Finally, it should also be noted that in the present description, relationship terms such as first and second are merely intended to distinguish one entity or operation from another entity or operation, and do not necessarily require or imply any such actual relationship or order between those entities or operations. Further, the terms "includes", "comprises" or any other variation thereof are intended to cover non-exclusive inclusion, such that a process, method, article, or device including a series of elements includes not only those elements, but also other elements not expressly listed, or elements that are inherent to such a process, method, article, or device. Without further limitation, the elements defined by the statement "including a ..." do not preclude the existence of additional identical elements in the process, method, article, or device that include the elements.

The dedicated management network port connection system, the physical layer chip management method, the device, the product and the medium provided by the present disclosure are described in detail as above. The principles and embodiments of the present disclosure are described with the specific examples. The descriptions of the above embodiments are only for helping to understand the method and core ideas of the present disclosure. At the same time, for a person skilled in the art, according to the ideas of the present disclosure, there may be changes in specific embodiments and application scopes. In summary, contents of the specification should not be understood as limiting the present disclosure.

## Claims

1. A dedicated management network port connection system, comprising: a security control module board and a mainboard provided with a first connector, wherein the security control module board is provided with a management device and a first physical layer chip connected to the management device, and the dedicated management network port connection system further comprises:
an input/output board installed on a front panel of a server chassis, wherein the input/output board is provided with a target socket of a dedicated management network port of the management device, a second physical layer chip and a second connector; wherein the first physical layer chip on the security control module board is connected in series with the second physical layer chip on the input/output board through the first connector and the second connector in sequence by using a serial communication bus, the first connector and the second connector are connectors that support a preset high density storage connection, and the target socket is a socket capable of generating electromagnetic interference to the security control module board; and
the management device on the security control module board controls the first physical layer chip and the second physical layer chip through several management buses.

2. The dedicated management network port connection system according to claim 1, wherein the management device on the security control module board is connected to the first physical layer chip through a reduced gigabit media independent interface bus.

3. The dedicated management network port connection system according to claim 1, wherein the first physical layer chip on the security control module board is connected in series with the second physical layer chip on the input/output board through the first connector and the second connector in sequence by using a serial gigabit media independent interface bus.

4. The dedicated management network port connection system according to claim 1, wherein the management device on the security control module board controls the first physical layer chip and the second physical layer chip through several management data input/output buses.

5. The dedicated management network port connection system according to claim 1, wherein the management device is configured to control transmission rates of the first physical layer chip and the second physical layer chip.

6. The dedicated management network port connection system according to claim 5, wherein the management device is configured to set the first physical layer chip and the second physical layer chip to a rate self-matching mode by using the management buses, so as to control the transmission rates.

7. The dedicated management network port connection system according to claim 5, wherein the management device is configured to obtain transmission rate setting parameters of the second physical layer chip and set the transmission rate setting parameters to the transmission rate of the first physical layer chip by using the management bus, so as to control the transmission rates.

8. The dedicated management network port connection system according to claim 1, wherein the first connector and the second connector are connected through a serial attached small computer system interface (SCSI).

9. The dedicated management network port connection system according to claim 1, wherein the management device on the security control module board accesses management registers of the first physical layer chip and the second physical layer chip through several management data input/output buses to monitor states of the first physical layer chip and the second physical layer chip.

10. The dedicated management network port connection system according to claim 1, wherein the second physical layer chip is connected to the target socket, and the first physical layer chip is a transit chip.

11. The dedicated management network port connection system according to claim 1, wherein a media access control sublayer protocol is bound to the second physical layer chip, and a medium access control layer is not bound to the first physical layer chip.

12. The dedicated management network port connection system according to claim 1, wherein the management device on the security control module board initializes configurations of the second connector and the second physical layer chip through management data input/output buses.

13. The dedicated management network port connection system according to any one of claims 1 to 12, wherein the management device is connected to the first physical layer chip by using a first management bus and is connected to the second physical layer chip through the first connector and the second connector in sequence by using a second management bus, wherein the first management bus and the second management bus are connected based on a multifunctional single-board multiplexing resistor; and
a first target position is reserved based on the multifunctional single-board multiplexing resistor without installing a resistor, so that a link between the management device and the second physical layer chip is in a disconnected state, wherein when controlling the physical layer chips, the management device sends a first control command to the first physical layer chip through the first management bus and sends a second control command to the second physical layer chip through the first management bus, so as to enable the management device to control the first physical layer chip and the second physical layer chip respectively through a management bus based on different control commands.

14. The dedicated management network port connection system according to any one of claims 1 to 12, wherein the management device is connected to the first physical layer chip by using a third management bus and is connected to the second physical layer chip through the first connector and the second connector in sequence by using a fourth management bus, wherein the third management bus and the fourth management bus are connected based on a multifunctional single-board multiplexing resistor; and
a second target position is reserved based on the multifunctional single-board multiplexing resistor without installing a resistor, so that a link between the management device and the second physical layer chip is in a connected state, wherein when controlling the physical layer chips, the management device sends a third control command to the first physical layer chip through the third management bus and sends a fourth control command to the second physical layer chip through the fourth management bus, so as to enable the management device to control the first physical layer chip and the second physical layer chip respectively through two management buses based on different control commands.

15. The dedicated management network port connection system according to any one of claims 1 to 12, wherein the management device is connected to the first physical layer chip through a fifth management bus; and
the first physical layer chip is connected to the second physical layer chip through the first connector and the second connector in sequence by using the fifth management bus, wherein when controlling the physical layer chips, the management device sends a fifth control command to the first physical layer chip through the fifth management bus, and the first physical layer chip sends the fifth control command to the second physical layer chip through the fifth management bus, so as to enable the management device to control the first physical layer chip and the second physical layer chip based on a same control command.

16. The dedicated management network port connection system according to any one of claims 1 to 12, wherein the first physical layer chip is connected to the second physical layer chip through the first connector and the second connector in sequence by using a sixth management bus, and the management device is connected to the first connector through a seventh management bus, wherein when controlling the physical layer chips, the management device sends a sixth control command to the second physical layer chip through the seventh management bus, and the second physical layer chip sends the sixth control command to the first physical layer chip through the sixth management bus, so as to enable the management device to control the first physical layer chip and the second physical layer chip based on a same control command.

17. A physical layer chip management method, applied to the dedicated management network port connection system according to any one of claims 1 to 16, comprising:
determining control links between the management device located on the security control module board of the dedicated management network port connection system with respective physical layer chips in the server, wherein the control links are communication links created between the management device with the respective physical layer chips based on several management buses, and the respective physical layer chips comprise the first physical layer chip located on the security control module board and the second physical layer chip located on the input/output board of the dedicated management network port connection system; and
sending control commands to the first physical layer chip and the second physical layer chip through the management device by using the control links, so as to control the first physical layer chip and the second physical layer chip.

18. An electronic device, comprising:
a memory configured to store a computer program; and
a processor configured to load and execute the computer program to implement the physical layer chip management method according to claim 17.

19. A computer program product, comprising: computer programs or instructions, wherein the computer programs or instructions, when executed by a processor, cause the processor to implement steps of the physical layer chip management method according to claim 17.

20. A computer non-transitory storage medium configured to store a computer program, wherein the computer program, when executed by a processor, causes the processor to implement the physical layer chip management method according to claim 17.
